# FASCICULE DE BREVET EUROPEEN

(11) **EP 1 850 546 B1**
(45) Date de publication et mention de la délivrance du brevet: **05.06.2019**
(21) Numéro de dépôt: 07106954.6
(22) Date de dépôt: 25.04.2007
(51) Int. Cl.: H04L 12/58, H04L 12/18

(54) **Gestion des fils de messages**
Nachrichten-Threadsverwaltung
Management of messages threads

(30) Priorité: 26.04.2006 FR 0651468
(43) Date de publication de la demande: 31.10.2007
(73) Titulaire: Orange, 75015 Paris (FR)
(72) Inventeur: BRIAND, Olivier, 14000 CAEN (FR); COURVAL, Lionel, 14210 AMAYE SUR ORNE (FR); BEZIAU, Christophe, 14320 SAINT MARTIN DE FONTENAY (FR)
(74) Mandataire: Cabinet Beau de Loménie

(56) Documents cités:
- KR-A- 2005 099 909
- US-A1- 2005 235 034
- US-B1- 6 792 448

## Description

La présente invention concerne un serveur apte à être utilisé dans un dispositif de récupération d'un ensemble de messages préalablement échangés, ledit serveur comprenant un premier module pour gérer l'envoi d'au moins un premier message par un premier client logiciel vers au moins un deuxième client logiciel, ce premier message ayant un sujet donné.

L'invention trouve des applications en matière d'archivage des messages. A l'heure actuelle, l'archivage d'un ensemble de messages échangés via une messagerie instantanée ("MI") est peu évolué. De tels ensembles sont également connus de l'homme du métier sous les appellations "fil de messages" (en anglais "thread") ou "fil de discussion". Cet archivage se contente de conserver des données du côté d'un client logiciel de la messagerie instantanée, localement, sans que les données ne soient exploitées par le service de messagerie instantanée. Ces ensembles de messages ne sont accessibles que d'un seul client logiciel spécifique de la messagerie instantanée, c'est-à-dire le client logiciel que l'utilisateur a utilisé en créant cet ensemble de messages. Ainsi, un utilisateur d'une messagerie instantanée qui se déplace et ne dispose pas en continu de ce client logiciel spécifique ne peut pas accéder à ses ensembles de messages.

La demande de brevet US 2005/0235034 divulgue un système de messagerie instantanée permettant d'archiver des fils de messages ou des parties de fils de messages en fonction de divers sujets. Pour cela le système indexe automatiquement ou à l'aide d'un utilisateur, les messages échangés. Lorsque l'utilisateur souhaite retrouver un message ou un fil de messages selon un sujet donné, le système permet ainsi de le lui fournir.

La demande de brevet KR 2005 099 909 décrit un système de messagerie instantanée offrant la possibilité de faire un couplage entre les sujets abordés pendant une conversation ("chatting") et des contenus stockés dans une base de données qui est continuellement mise a jour. Si le système trouve une correspondance entre des mots clés utilisés dans la conversation actuelle et un contenu, il donne à tous les participants de la conversation la possibilité de cliquer sur un de ces mots clés. Le système transmet ensuite le contenu au participant qui a cliqué sur ce mot clé.

Le brevet US 6 792 448 décrit un système de messagerie dans lequel les messages sont automatiquement groupés ensemble en fonction de leur type. Ceci mène à des échanges plus structurés puisque par exemple, une question et la réponse à cette question sont mis en corrélation. Les échanges qui en résultent sont présentés sous forme d'arbres avec une ou plusieurs branches ("threads"), et sont stockés dans un ordinateur central. Les utilisateurs autorisés y ont accès lorsqu'ils souhaitent participer à un de ces échanges.

La présente invention remédie aux inconvénients cités ci-dessus en proposant un serveur selon la revendication 1 qui permet un accès aux ensembles de messages d'un utilisateur indépendamment du client logiciel de messagerie instantanée.

Un tel serveur a pour avantage qu'il rend possible de retrouver des messages préalablement échangés sur n'importe quel client logiciel parce que les messages sont stockés centralement sur ce serveur. Dans ce cadre ce client logiciel peut tourner sur un terminal comme un PC fixe ou un portable, par exemple du type SPV.... De plus, chacun des utilisateurs retrouve un contexte des messages quel que soit son client logiciel de messagerie instantanée puisque tout est conservé par le serveur sous forme de messages instantanés. Il est notamment possible que des utilisateurs différents utilisent des clients logiciels de messageries instantanées différentes. Un utilisateur obtient ainsi la possibilité d'accéder à ses ensembles de messages depuis n'importe quel client logiciel. Lorsqu'un échange de messages est relancé avec le serveur selon l'invention, l'historique des messages est repris pour être affiché sur le client logiciel de l'utilisateur: la continuité de l'ensemble de messages est alors conservée. La liste des personnes ayant participé à l'échange est aussi conservée et affichée.

Dans la suite le mot "client logiciel" sera utilisé pour indiquer, comme ci-dessus un programme qui sollicite des services d'un autre programme et le mot "client" pour indiquer une personne qui bénéficie d'un service ou d'un produit.

Par exemple, dans le milieu professionnel, au cas où un utilisateur d'un système de messagerie instantanée comprenant le serveur est un commercial itinérant qui est en train de négocier un contrat avec un autre utilisateur du système de messagerie instantanée (par exemple un client ou un client potentiel), ce commercial peut accéder depuis n'importe quel client logiciel aux messages échangés préalablement.

Dans la messagerie instantanée, l'échange de messages est synchrone, ce qui veut dire qu'un destinataire lit le message aussitôt et un échange de messages ne peut être initié que si les deux interlocuteurs sont simultanément disponibles. La messagerie instantanée gère la "présence" des utilisateurs connectés. Les protocoles les plus utilisés sont XMPP et SIMPLE pour la messagerie instantanée.

Dans les systèmes de courrier électronique du type e-mail ou courriel (parfois appelés "messageries classiques"), l'échange de messages est asynchrone, c'est-à-dire qu'un destinataire lira un message au bout d'un intervalle de temps indéfini par rapport à l'envoi du message. Parmi divers protocoles couramment utilisés pour l'échange de courriels figurent par exemple les protocoles référencés SMTP, POP3, IMAP4, qui sont différents de ceux mis en oeuvre dans les systèmes de messagerie instantanée. En général, les logiciels qui gèrent les courriels ne sont pas compatibles avec les systèmes de messagerie instantanée.

Dans une variante de réalisation, l'invention concerne également un serveur tel que décrit ci-dessus caractérisé en ce qu'il inclut en outre une deuxième zone mémoire, ladite deuxième zone mémoire étant destinée à stocker au moins un attribut pour un message inclus dans ladite première zone mémoire. Un tel serveur a pour avantage que, à partir d'un ou de plusieurs attributs, par exemple des droits associés à chaque message ainsi qu'à chaque utilisateur, le serveur permettra d'inhiber toute transmission vers un client logiciel des messages de l'historique que ce client logiciel n'aura pas été autorisé préalablement à recevoir.

L'invention concerne également un procédé de récupération d'un ensemble de messages préalablement échangés selon la revendication 3.

Le procédé a pour avantage qu'une telle récupération des messages par sujet permet à la fois un archivage intelligent des messages et une continuité dans les sujets des échanges. Une telle récupération permet en plus une poursuite d'échanges déjà lancés en permettant de retrouver le contexte de ces échanges ainsi que les personnes qui y sont impliquées.

Dans une variante de réalisation, l'invention concerne également un procédé comme décrit ci-dessus caractérisé en ce qu'il inclut en outre au moins une étape de vérification par ledit premier module d'une présence d'un identifiant qui correspond à un premier utilisateur dans une liste qui appartient à un deuxième utilisateur et qui est stockée dans une troisième zone mémoire du serveur. Pour discuter avec un utilisateur, on l'ajoute à une liste dite de contacts (connue de l'homme du métier sous l'appellation anglaise "Buddy List"). Ce procédé a pour avantage que si un utilisateur B a été éliminer de la liste de contacts d'un utilisateur A, l'étape de vérification évite ainsi que A procède par hasard à un échange avec B.

Dans une variante de réalisation, l'invention concerne également un procédé comme décrit ci-dessus caractérisé en ce qu'il inclut en outre une étape d'envoi d'un premier ensemble de messages vers le premier client logiciel, ce premier ensemble étant différent d'un deuxième ensemble de messages envoyé vers le deuxième client logiciel. Ce procédé a pour avantage qu'un utilisateur d'un client logiciel ne peut recevoir que des messages qui sont effectivement liés à cet utilisateur.

Dans une variante de réalisation, l'invention concerne également un procédé comme décrit ci-dessus caractérisé en ce qu'il inclut en outre une étape d'interrogation afin de trouver dans ladite deuxième zone mémoire au moins un droit d'accès lié à un message dudit ensemble et une étape d'envoi vers lesdits clients logiciels desdits messages en fonction dudit droit d'accès. Ce procédé a pour avantage de rendre possible une consultation spécifique des messages préalablement échangés. Un supérieur hiérarchique pourra par exemple consulter des messages qui sont différents des messages que ses subordonnées peuvent consulter, dans une hypothèse ou ledit supérieur possède des droits plus étendus que ceux de ses subordonnées. Dans une variante de réalisation, l'invention concerne également un procédé comme décrit ci-dessus caractérisé en ce que ladite étape d'envoi dudit deuxième message depuis ledit premier module se limite à des clients logiciels préalablement spécifiés. Ce procédé a pour avantage c'est que lors d'une récupération d'un ensemble des messages, on ne demandera pas la présence que des utilisateurs spécifiques. Les autres personnes qui ont participé à l'échange ne seront pas dérangées.

L'invention concerne également un système de messagerie instantanée comprenant un serveur comme décrit ci-dessus.

L'invention concerne également un programme d'ordinateur comprenant des instructions de code de programme pour l'exécution des étapes des procédés comme décrits ci-dessus lorsque ledit programme est exécuté sur un ordinateur.

L'invention concerne également un support d'enregistrement lisible par un ordinateur sur lequel est enregistré un programme d'ordinateur comprenant des instructions de code de programme pour l'exécution des étapes des procédés comme décrits ci-dessus.

L'invention sera mieux comprise à l'aide de la description suivante, faite à titre d'exemple non-limitatif et en regard des dessins annexés, dans lesquels :
- la figure 1 est un schéma fonctionnel décrivant un système de messagerie instantanée classique,
- la figure 2 est un schéma fonctionnel décrivant un système de messagerie instantanée selon l'invention.

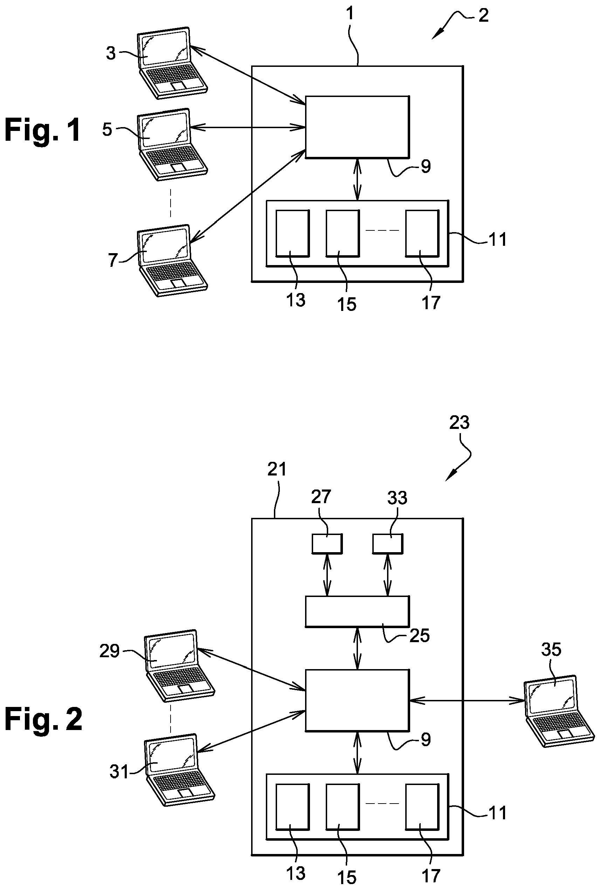

La figure 1 représente schématiquement un système ou service de messagerie instantanée classique 2 ou messagerie instantanée en bref. Ce système comporte: un serveur de messagerie instantanée 1 comprenant un module de messagerie instantanée 9. Via des clients logiciels 3, 5, 7 tournant par exemple sur des terminaux comme des assistants personnel numérique (en anglais: Personal Digital Assistants) souvent appelé par leur acronyme anglais PDA's, sur des ordinateurs personnels et/ou sur des portables, des utilisateurs peuvent contacter le module 9. Ainsi, dans la figure 1, le service de messagerie instantanée 2 permet le dialogue entre deux ou plusieurs utilisateurs de la messagerie instantanée 2. Le serveur 1 comprend aussi une zone mémoire 11. Dans la zone mémoire 11, qui est d'ailleurs persistante, sont stockés des listes 13, 15, 17 pour chaque client logiciel 3, 5, 7. Par exemple, le client logiciel 3 dispose de la liste 13, le client logiciel 5 dispose de la liste 15 et le client logiciel 7 dispose de la liste 17. Les utilisateurs de la messagerie instantanée 2 sont définis par des identifiants respectives. Ces identifiants sont présents dans les listes 13, 15 et 17. Par exemple, la liste 13 répertoriera des identifiants correspondant et représentant des autres utilisateurs, par exemple l'identifiant de l'utilisateur du client logiciel 5 et l'identifiant de l'utilisateur du client logiciel 7, avec lesquels l'utilisateur 3 peut dialoguer. Les listes 13, 15 et 17 sont aussi connues comme "Buddy Lists" ou listes de contact. L'état d'un utilisateur donné dans la Buddy List peut varier de "présent" à "absent" en passant par "occupé", "disponible"... Ces états de présence définissent pour les autres utilisateurs, la capacité à dialoguer avec cet utilisateur donné. Par exemple pour l'utilisateur du client logiciel 3, l'état de l'utilisateur du client logiciel 5 représenté par un identifiant dans son Buddy List 13 peut être "disponible". Par contre, l'état de l'utilisateur du client logiciel 7 représenté par un autre identifiant dans la même Buddy List 13 peut être "occupé". La figure 1 montre à titre d'exemple trois Buddy Lists 13, 15, 17, mais le nombre de Buddy List peut naturellement être plus ou moins que trois. Les Buddy Lists 13, 15, 17 sont également gérées par le module 9.

On utilise des logiciels afin de gérer un dialogue entre les utilisateurs d'une messagerie instantanée. Un tel dialogue comprendra, en général, plusieurs messages échangés entre plusieurs utilisateurs. Une telle ensemble de messages est également appelé fil de discussion ou fil de messages (ou "thread" en anglais). Un fil de messages est par exemple défini par un sujet (un nom, un thème ou autre identifiant), des utilisateurs et un contenu, c'est-à-dire des messages horodatés. Les logiciels de messagerie instantanée comprennent des serveurs logiciels et des clients logiciels. Les clients logiciels tournent sur des terminaux. Les clients logiciels affichent le Buddy List à partir de laquelle les utilisateurs peuvent lancer des discussions en envoyant des messages instantanés. Les serveurs logiciels de messagerie instantanée, se contentent alors de relayer les messages de client logiciel à client logiciel. A l'heure actuelle, dans les messageries instantanées classiques, les fils de discussion sont conservés localement sur les clients. Ceci est par exemple le cas pour un logiciel tel que MSN messenger. Ce logiciel classe les messages par fils sur le client logiciel, localement, et ces fils sont rappelés lorsqu'un utilisateur veut relancer une discussion avec un contact de sa Buddy List. Actuellement, sur une messagerie instantanée, l'utilisateur entre en relation à partir de sa liste de contacts.

La figure 2 est un schéma qui représente une messagerie instantanée 23 selon l'invention. La messagerie instantanée comprend un serveur de messagerie instantanée 21. Ce serveur permet d'échanger des messages instantanés entre deux personnes vues par le serveur comme unique grâce à leur identifiant. Le serveur 21 se compose d'un premier module dit de messagerie instantanée 9, un deuxième module dit de gestion des fils de message 25 et une première mémoire dite base des messages 27. Un utilisateur d'un client logiciel 29 peut, via ce module 9, dialoguer avec un utilisateur d'un client logiciel 31, dans une façon comparable à celle décrite ci-dessus en relation avec la figure 1. Le module 9 permet la gestion de la présence et l'échange de messages entre clients logiciels de messagerie instantanée 29, 31 en fonction de règles de routage de messages instantanés. Tous les messages en provenance d'un client logiciel 29, 31 de la messagerie instantanée 23, transitent d'abord par le module 9.

Le serveur 21 se compose aussi d'un module de gestion des fils de message 25. Ce module 25 permet de retrouver les messages d'un historique de conversation dans la base des messages 27. La fonction de la base de messages 27 sera expliquée ci-dessous. Chaque fil de messages est lié à des contacts. Le module 25 envoie les messages à la module 9 qui les relaie vers les clients logiciels 29, 30. Le module 25 se place entre le module de messagerie instantanée 9 et le base 27. Son fonctionnement est le suivant: le module 25 reçoit tous les premiers messages en provenance du module 9 correspondant à la réactivation d'un échange des messages: ces messages contiennent une information supplémentaire qui est un identifiant de fil de messages. Le module 25 retrouve alors les messages associés au fil de messages concerné et renvoie les messages composant l'historique du fil de discussion aux clients logiciels concernés, dans l'exemple de la figure 2, le client logiciel 29 et le client logiciel 31. Les messages sont transmis au module de messagerie instantanée 9 puis envoyés aux destinataires, les utilisateurs des clients logiciels raccordés au module 9 comme dans l'exemple de la figure 2, le client 29 logiciel et le client 31 logiciel.

Le serveur 21 se compose aussi d'une base d'information des messages 27. La base d'information des messages 27 fait partie intégrante du serveur de messagerie instantanée 21. Cette base 27 contient les fils de messages et donc la totalité des messages échangés. Chaque fil de messages est par exemple attaché à un sujet (un nom, un thème), des contacts et un contenu, c'est-à-dire des messages horodatés. Le serveur 21 peut comprendre une zone mémoire 11 avec des Buddy-Lists 13, 15 et 17.

Dans un variant de l'invention le serveur 21 comprend en plus une deuxième zone mémoire dite base de gestion de droits 33. Dans le variant décrit dans la suite, cette base 33 fait partie intégrante du serveur de messagerie instantanée 21. Le module 25 se place entre le module de messagerie instantanée 9 et la base 33. Cette base 33 contient une information nouvelle, notamment les droits attachés aux messages et aux utilisateurs associés. Les utilisateurs peuvent également être traités en catégorie et donc par rôle. Par exemple, un manager et les personnes de son équipe n'ont pas le même rôle. De plus, la base 31 permet de n'envoyer au client logiciel (via le module 9) que les messages qui sont associés à un utilisateur: ainsi il se peut que chaque utilisateur à un échange ne reçoive pas le même historique de message. Une notion de droits peut être ajoutée permettant, si plusieurs utilisateurs sont liés à un fil de discussion, de n'afficher sur les clients logiciels que les messages en relation avec les utilisateurs concernés. Les droits sont attachés aux messages, ce qui permet de gérer les informations par utilisateur (par rôle en fait). Dans ce variant supposons qu'un utilisateur d'un troisième client logiciel 35 est présent. Dans ce cas, le fonctionnement du module 25 est le suivant: si cet utilisateur n'a pas les mêmes droits (un rôle différent par exemple) par rapport à l'historique des messages renvoyés, le contenu des messages que le client logiciel 35 reçoit n'est pas le même que le contenu des messages que le client logiciel 29 et le client logiciel 31 reçoivent.

Suivant, la figure 2 sera utilisée afin d'expliquer quelques exemples d'un procédé selon l'invention. Comme hypothèses de travail sera utilisée que l'utilisateur du client logiciel 29 peut entrer en contact avec l'utilisateur du client logiciel 31 et que la base d'information des messages 27 contient au moins un message M1 lié à le client logiciel 29 et le client logiciel 31. Le fil de messages contient dans ce cas ce message M1. Ce fil de message est caractérisé par un sujet donné (par exemple "projet A"). L'utilisateur du client 29 veut entrer en relation via la messagerie instantanée 23 avec l'utilisateur du client logiciel 31. Le procédé comprend les étapes suivantes.
Etape 1: Un message M0 est envoyé depuis le client logiciel 29 vers le module de messagerie instantanée 9: ce message contient le sujet de l'échange ("projet A") correspondant à ce fil de message.
Etape 2: Le message est transféré du module de messagerie instantanée 9 au module de gestion des fils de messages 25.
Etape 3: Le module de gestion des fils de messages 25 interroge la base 27 pour retrouver les messages préalablement échangés.
Etape 4: Le module de gestion 25 envoie l'historique des messages à envoyer au module 9 qui les transmet aux clients logiciels du serveur 21.
Etape 5: Le module 9 envoie alors le message M1 vers le client logiciel 29 et vers le client logiciel 31. L'utilisateur du client logiciel 29 retrouve alors le fil de messages qu'il avait échangé avec l'utilisateur du client logiciel 31. La continuité du sujet d'échange est alors conservée.

Le procédé peut également être utilisé avec plusieurs utilisateurs avec les clients logiciels 29, 31 et 35 respectivement.

Dans un variant, supposons que l'utilisateur du client logiciel 29 a l'utilisateur du client logiciel 31 et l'utilisateur du client logiciel 35 dans son Buddy List 13. Et l'utilisateur du client logiciel 31 a l'utilisateur du client logiciel 29 dans son Buddy List 15. Dans ce variant, le procédé comprend une étape 6 additionnel pendant laquelle le module de messagerie instantanée 9 interroge la zone mémoire 11 pour vérifier que l'utilisateur du client logiciel 29 a bien les utilisateurs du client 31 et du client 35 dans son Buddy List 13. Cette étape peut avoir lieu au même temps que l'étape 2: le transfert du message M1 depuis le module de messagerie instantanée 9 vers le module de gestion des fils de messages 25.

Le procédé peut comprendre une étape 8 pendant laquelle un ou plusieurs clients logiciels des utilisateurs est/sont ajouté(s) en cours d'un échange. Par exemple, supposons que la base de messages 27 contient le fil de messages suivant:
1. M1 lié à l'utilisateur du client logiciel 29 et l'utilisateur du client logiciel 31
2. M2 lié à l'utilisateur du client logiciel 29 et l'utilisateur du client logiciel 31
3. M3 lié à l'utilisateur du client logiciel 29 et l'utilisateur du client logiciel 31
4. M4 lié à l'utilisateur du client logiciel 29, l'utilisateur du client logiciel 31 et l'utilisateur du client logiciel 35
5. M5 lié à l'utilisateur du client logiciel 29, l'utilisateur du client logiciel 31 et l'utilisateur du client logiciel 35

Dans cet exemple, l'utilisateur du client logiciel 35 a rejoint le fil de messages après l'utilisateur du client logiciel 29 et l'utilisateur du client logiciel 31 qui ont déjà échangés des messages.

Dans ce cas, pendant l'étape 5, le module 9 envoie les messages M1, M2, M3, M4, M5 vers le client logiciel 29 et vers le client logiciel 31. Par contre, vers le client logiciel 35, le module 9 envoie seulement les messages M4, M5. L'utilisateur du client logiciel 29 retrouve alors le fil des messages qu'il avait échangé avec l'utilisateur du client logiciel 31 et l'utilisateur du client logiciel 35; de même pour l'utilisateur du client logiciel 31 et l'utilisateur du client logiciel 35. Ici, l'utilisateur du client logiciel 35 a été ajouté en cours de route à l'échange en cours: il peut être sorti de la discussion tout comme l'utilisateur du client logiciel 29 et l'utilisateur du client logiciel 31.

Dans un variant, le procédé comprend une étape 7 additionnelle pendant laquelle le module de gestion 25 interroge la base 33 pour retrouver les droits des utilisateurs sur les messages dans un fil de messages.

Dans un variant, le procédé comprend une étape pendant laquelle des autres clients logiciels des autres utilisateurs sont ajoutés à un échange des messages mais de façon provisoire car ces autres utilisateurs n'appartenant pas à part entière au sujet évoqué (par exemple, en cas d'une demande de précision). Dans ce cas, à la réactivation d'un échange, on ne demandera pas la présence de cet utilisateur. Un tel utilisateur ne reçoit pas les messages préalablement échangés. En effet, habituellement, pour discuter avec un utilisateur, on l'ajoute à sa liste de contacts et on demande alors son état de présence.

Bien que l'invention ait été décrite en relation d'un serveur central 21, il est envisageable que le serveur 21 comprend en fait plusieurs serveurs secondaires répartis sur plusieurs endroits. Les fils de messages selon l'invention sont pourtant stockés une fois.

Aussi, la zone mémoire 11, le module de gestion 25, la base des messages 27, la base de gestion de droits 33, et/ou le module de messagerie instantanée 9 peuvent être répartis sur un ou plusieurs serveurs à part.

En plus, au moins deux zones mémoires pourraient être incluses par exemple dans un même composant mémoire ou sur un même disque dur.

## Revendications

1. **Serveur** (21) apte à être utilisé dans un système de messagerie instantanée, ledit serveur (21) comprenant un premier module (9), de messagerie, pour gérer des échanges de messages entre des clients logiciels (29, 31, 35) exécutés respectivement sur des terminaux d'utilisateurs, lesdits messages ayant un sujet donné, ledit serveur étant **caractérisé en ce qu'**il inclut en outre un deuxième module (25), de récupération de messages préalablement échangés, comportant :
- des moyens pour recevoir depuis ledit premier module (9), au moins un premier message (M0) envoyé par un premier client logiciel (29) vers au moins un deuxième client logiciel (31, 35),
- des moyens pour retrouver dans une première zone mémoire (27), sur réception dudit au moins un premier message (M0), au moins un deuxième message (M1) d'un fil de messages correspondant à un précédent échange de messages entre ledit premier client logiciel (29) et ledit au moins un deuxième client logiciel (31,35), et
- des moyens pour envoyer ledit au moins un deuxième message (M1) ayant pour sujet ledit sujet donné vers ledit premier module (9), à la réception duquel ledit premier module envoie ledit au moins un deuxième message (M1) vers ledit premier client logiciel (29) et vers au moins un deuxième client logiciel (31,35).

2. Serveur (21) selon la revendication 1 **caractérisé en ce qu'**il inclut en outre une deuxième zone mémoire (33), ladite deuxième zone mémoire (33) étant destinée à stocker au moins un attribut pour un message inclus dans ladite première zone mémoire (27).

3. **Procédé** de récupération d'un ensemble de messages préalablement échangés entre des clients logiciels (29, 31, 35) exécutés respectivement sur des terminaux d'utilisateurs, via un serveur de messagerie instantanée (21), ledit procédé comprenant une étape d'envoi d'au moins un premier message (M0) par un premier client logiciel (29) vers au moins un deuxième client logiciel (31, 35) via un premier module (9) dudit serveur de messagerie (21), ce premier message (M0) ayant un sujet donné, ledit procédé étant **caractérisé en ce qu'**il inclut en outre :
- une étape de transfert dudit premier message (M0) depuis ledit premier module (9) vers un deuxième module (25) dudit serveur de messagerie, ledit deuxième module étant pour récupérer des messages préalablement échangés, déclenchant :
- une étape de récupération par ledit deuxième module, dans une première zone mémoire (27), d'au moins un deuxième message (M1) d'un fil de messages correspondant à un précédent échange de messages entre ledit premier client logiciel (29) et ledit au moins deuxième client logiciel (31,35) ;
- une étape d'envoi par ledit deuxième module (25) dudit au moins un deuxième message (M1) ayant pour sujet ledit sujet, vers ledit premier module (9); et
- une étape d'envoi dudit au moins un deuxième message (M1) depuis ledit premier module (9) vers le premier client logiciel (29) et vers au moins un deuxième client logiciel (31, 35).

4. Procédé selon la revendication 3, **caractérisé en ce qu'**il inclut en outre au moins une étape de vérification par ledit premier module (9) d'une présence d'un identifiant qui correspond à un premier utilisateur dans une liste (13) qui appartient à un deuxième utilisateur et qui est stockée dans une troisième zone mémoire (11) du serveur (21).

5. Procédé selon l'une quelconque des revendications 3 à 4 **caractérisé en ce qu'**il inclut en outre une étape d'envoi d'un premier ensemble de messages vers le premier client logiciel, ce premier ensemble étant différent d'un deuxième ensemble de messages envoyé vers le deuxième client logiciel.

6. Procédé selon l'une quelconque des revendications 3 à 5 **caractérisé en ce qu'**il inclut en outre une étape d'interrogation afin de trouver dans ladite deuxième zone mémoire (33) au moins un droit d'accès lié à un message dudit ensemble et
une étape d'envoi vers lesdits clients logiciels (29, 31, 35) desdits messages en fonction dudit droit d'accès.

7. Procédé selon l'une quelconque des revendications 3 à 6 **caractérisé en ce que** ladite étape d'envoi dudit au moins un deuxième message (M1) depuis ledit premier module (9) se limite à des clients logiciels préalablement spécifiés.

8. **Système** de messagerie instantanée (23) comprenant un serveur (21) selon l'une quelconque des revendications 1 à 2.

9. **Programme** d'ordinateur comprenant des instructions de code de programme pour l'exécution des étapes du procédé selon les revendications 3 à 7 lorsque ledit programme est exécuté sur un ordinateur.

10. **Support** d'enregistrement sur lequel sont enregistrées des instructions de code de programme pour l'exécution des étapes du procédé selon les revendications 3 à 7.

## Patentansprüche

1. Server (21), welcher geeignet ist, in einem Instant-Messaging-System verwendet zu werden, wobei der Server (21) ein erstes Nachrichtenübermittlungsmodul (9) umfasst, um Nachrichtenaustausche zwischen Softwareclients (29, 31, 35) zu verwalten, die jeweils auf Benutzerendgeräten ausgeführt werden, wobei die Nachrichten einen gegebenen Gegenstand haben, wobei der Server **dadurch gekennzeichnet ist, dass** er außerdem ein zweites Modul (25) zur Wiederherstellung von zuvor ausgetauschten Nachrichten aufweist, welches umfasst:
- Mittel zum Empfangen, vom ersten Modul (9), wenigstens einer ersten Nachricht (M0), die von einem ersten Softwareclient (29) an wenigstens einen zweiten Softwareclient (31, 35) gesendet wurde,
- Mittel zum Abrufen, aus einem ersten Speicherbereich (27) bei Empfang der wenigstens einen ersten Nachricht (M0), wenigstens einer zweiten Nachricht (M1) eines Nachrichten-Threads, der einem vorangegangenen Nachrichtenaustausch zwischen dem ersten Softwareclient (29) und dem wenigstens einen zweiten Softwareclient (31, 35) entspricht, und
- Mittel zum Senden der wenigstens einen zweiten Nachricht (M1), die den gegebenen Gegenstand zum Gegenstand hat, an das erste Modul (9), bei deren Empfang das erste Modul die wenigstens eine zweite Nachricht (M1) an den ersten Softwareclient (29) und an wenigstens einen zweiten Softwareclient (31, 35) sendet.

2. Server (21) nach Anspruch 1, **dadurch gekennzeichnet, dass** er außerdem einen zweiten Speicherbereich (33) aufweist, wobei der zweite Speicherbereich (33) dazu bestimmt ist, wenigstens ein Attribut für eine Nachricht zu speichern, die in dem ersten Speicherbereich (27) enthalten ist.

3. Verfahren zur Wiederherstellung einer Gesamtheit von Nachrichten, die zuvor zwischen Softwareclients (29, 31, 35) ausgetauscht wurden, die jeweils auf Benutzerendgeräten ausgeführt werden, über einen Instant-Messaging-Server (21), wobei das Verfahren einen Schritt des Sendens wenigstens einer ersten Nachricht (M0) durch einen ersten Softwareclient (29) an wenigstens einen zweiten Softwareclient (31, 35) über ein erstes Modul (9) des Messaging-Servers (21) umfasst, wobei diese erste Nachricht (M0) einen gegebenen Gegenstand hat, wobei das Verfahren **dadurch gekennzeichnet ist, dass** es außerdem beinhaltet:
- einen Schritt der Übertragung der ersten Nachricht (M0) von dem ersten Modul (9) an ein zweites Modul (25) des Messaging-Servers, wobei das zweiten Modul zur Wiederherstellung von zuvor ausgetauschten Nachrichten geeignet is, welcher auslöst:
- einen Schritt der Wiederherstellung, durch das zweite Modul in einem ersten Speicherbereich (27), wenigstens einer zweiten Nachricht (M1) eines Nachrichten-Threads, der einem vorangegangenen Nachrichtenaustausch zwischen dem ersten Softwareclient (29) und dem wenigstens einen zweiten Softwareclient (31, 35) entspricht;
- einen Schritt des Sendens, durch das zweite Modul (25), der wenigstens einen zweiten Nachricht (M1), die den Gegenstand zum Gegenstand hat, an das erste Modul (9); und
- einen Schritt des Sendens der wenigstens einen zweiten Nachricht (M1) vom ersten Modul (9) an den ersten Softwareclient (29) und an wenigstens einen zweiten Softwareclient (31, 35).

4. Verfahren nach Anspruch 3, **dadurch gekennzeichnet, dass** es außerdem wenigstens einen Schritt der Überprüfung, durch das erste Modul (9), eines Vorhandenseins einer Kennung, welche einem ersten Benutzer entspricht, in einer Liste (13), welche einem zweiten Benutzer gehört und welche in einem dritten Speicherbereich (11) des Servers (21) gespeichert ist, beinhaltet.

5. Verfahren nach einem der Ansprüche 3 bis 4, **dadurch gekennzeichnet, dass** es außerdem einen Schritt des Sendens einer ersten Gesamtheit von Nachrichten an den ersten Softwareclient beinhaltet, wobei diese erste Gesamtheit von einer zweiten Gesamtheit von Nachrichten, die an den zweiten Softwareclient gesendet wird, verschieden ist.

6. Verfahren nach einem der Ansprüche 3 bis 5, **dadurch gekennzeichnet, dass** es außerdem einen Schritt der Abfrage beinhaltet, um im zweiten Speicherbereich (33) wenigstens ein Zugriffsrecht zu finden, das mit einer Nachricht der Gesamtheit verbunden ist, und
einen Schritt des Sendens der Nachrichten an die Softwareclients (29, 31, 35) in Abhängigkeit von dem Zugriffsrecht.

7. Verfahren nach einem der Ansprüche 3 bis 6, **dadurch gekennzeichnet, dass** der Schritt des Sendens der wenigstens einen zweiten Nachricht (M1) vom ersten Modul (9) auf Softwareclients begrenzt ist, die zuvor angegeben wurden.

8. Instant-Messaging-System (23), welches einen Server (21) nach einem der Ansprüche 1 bis 2 umfasst.

9. Computerprogramm, welches Programmcodeanweisungen zur Ausführung der Schritte des Verfahrens nach den Ansprüchen 3 bis 7, wenn das Programm auf einem Computer ausgeführt wird, umfasst.

10. Aufzeichnungsmedium, auf welchem Programmcodeanweisungen zur Ausführung der Schritte des Verfahrens nach den Ansprüchen 3 bis 7 aufgezeichnet sind.

## Claims

1. Server (21) designed to be used in an instant messaging system, the said server (21) comprising a first messaging module (9) for managing exchanges of messages between software clients (29, 31, 35) respectively executed on user terminals, the said messages having a given subject, the said server being **characterized in that** it furthermore includes a second module (25), for recovery of messages previously exchanged, comprising
- means for receiving from the said first module (9), at least one first message (M0) sent by a first software client (29) to at least one second software client (31, 35),
- means for locating in a first memory area (27), upon receipt of the said at least one first message (M0), at least one second message (M1) from a thread of messages corresponding to a previous exchange of messages between the said first software client (29) and the said at least one second software client (31,35), and
- means for sending the said at least one second message (M1) having as subject the said given subject to the said first module (9), upon receiving which the said first module sends the said at least one second message (M1) to the said first software client (29) and to at least one second software client (31,35).

2. Server (21) according to Claim 1, **characterized in that** it furthermore includes a second memory area (33), the said second memory area (33) being intended to store at least one attribute for a message included in the said first memory area (27).

3. Method for recovering a set of messages previously exchanged between software clients (29, 31, 35) respectively executed on user terminals, via an instant messaging server (21), the said method comprising a step for sending at least one first message (M0) by a first software client (29) to at least one second software client (31, 35) via a first module (9) of the said messaging server (21), this first message (M0) having a given subject, the said method being **characterized in that** it furthermore includes:
- a step for transferring the said first message (M0) from the said first module (9) to a second module (25) of the said messaging server, said second module being for recovering messages previously exchanged, of the said messaging server, triggering:
- a step for recovery by the said second module, in a first memory area (27), of at least one second message (M1) from a thread of messages corresponding to a previous exchange of messages between the said first software client (29) and the said at least second software client (31,35);
- a step for sending, by the said second module (25), the said at least one second message (M1) having as subject the said subject, to the said first module (9); and
- a step for sending the said at least one second message (M1) from the said first module (9) to the first software client (29) and to at least one second software client (31, 35).

4. Method according to Claim 3, **characterized in that** it furthermore includes at least one step for verification by the said first module (9) of the presence of an identifier that corresponds to a first user in a list (13) which belongs to a second user and which is stored in a third memory area (11) of the server (21).

5. Method according to either one of Claims 3 and 4, **characterized in that** it furthermore includes a step for sending a first set of messages to the first software client, this first set being different from a second set of messages sent to the second software client.

6. Method according to any one of Claims 3 to 5, **characterized in that** it furthermore includes an interrogation step in order to locate within the said second memory area (33) at least one access right linked to a message from the said set and
a step for sending the said messages, depending on the said access right, to the said software clients (29, 31, 35).

7. Method according to any one of Claims 3 to 6 **characterized in that** the said step for sending the said at least one second message (M1) from the said first module (9) is limited to software clients previously specified.

8. Instant messaging system (23) comprising a server (21) according to any one of Claims 1 to 2.

9. Computer programme comprising programme code instructions for the execution of the steps of the method according to Claims 3 to 7 when the said programme is executed on a computer.

10. Recording medium on which programme code instructions are recorded for the execution of the steps of the method according to Claims 3 to 7.
